# EUROPEAN PATENT SPECIFICATION

(11) **EP 3 509 967 B1**
(45) Date of publication and mention of the grant of the patent: **10.03.2021**
(21) Application number: 17777878.4
(22) Date of filing: 28.09.2017
(51) Int. Cl.: B65D 90/00

(54) **A CONTAINER CORNER LOCK FOR LOCKING A SHIPPING CONTAINER INTO POSITION**
BEHÄLTERECKVERSCHLUSS ZUR VERRIEGELUNG EINES VERSANDCONTAINERS IN POSITION
VERROU D'ANGLE DE CONTENANT DESTINÉ À VERROUILLER UN CONTENEUR D'EXPÉDITION EN POSITION

(30) Priority: 27.10.2016 SE 1651403
(43) Date of publication of application: 17.07.2019
(73) Proprietor: LOX Container Technology AB, 115 56 Stockholm (SE)
(72) Inventor: OMRE, Kent, 113 50 Stockholm (SE); LÖNN, Christoffer, 172 37 Sundbyberg (SE); SCHLYTER, Gunnar, 441 73 Sollebrunn (SE)
(74) Representative: Hynell Intellectual Property AB
(86) International application number: PCT/EP2017/074691
(87) International publication number: WO 2018/077568

(56) References cited:
- EP-A2- 1 937 511
- WO-A1-2011/110743
- WO-A1-2016/060961
- US-A1- 2010 089 914

## Description

### TECHNICAL FIELD

The present invention relates to a lock for locking a shipping container in place when superimposed onto a lower container.

### BACKGROUND ART

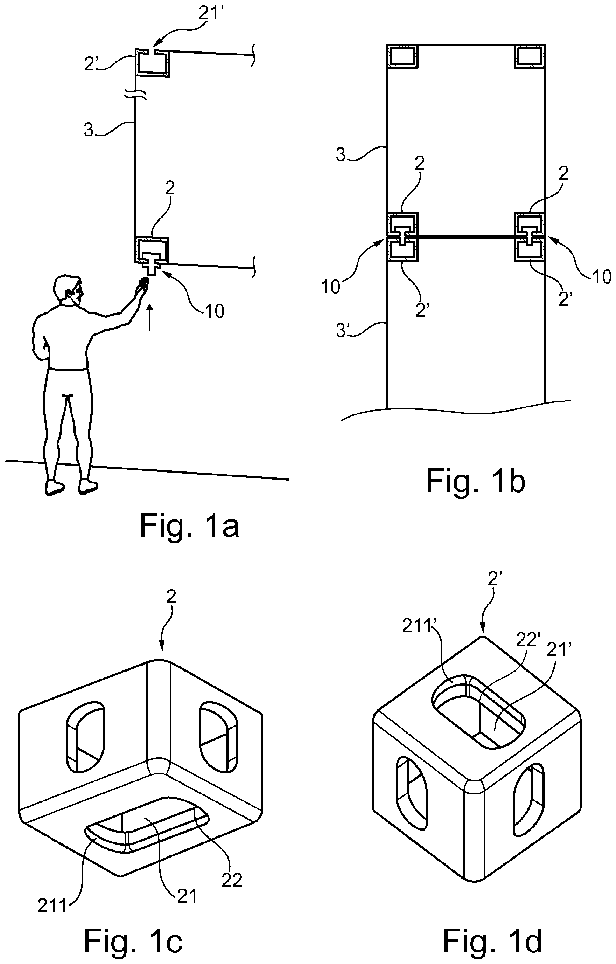

A twistlock and corner casting together form a standardized rotary connector for securing and locking shipping containers onto one another when stacked e.g. on a container ship, semi-trailer truck or railway container train. The corner casting constitutes a female part of the connector and is fitted to the container itself, one in each of the eight corners. It has no moving parts, only oval holes in its side-, top- and bottom surfaces respectively. The male component is a twistlock, which is arranged to engage the corner casting and comprises a rotary top portion and a rotary bottom portion, and is inserted through the hole. Then, the top portion or the bottom portion is rotated 90° to lock the twistlock to the corner casting. Referring to Fig. 1, according to established methods, the twistlocks are manually introduced into the four lowermost corner castings of a container on the quay and subsequently locked into place. In this position, the twistlock has one portion being locked inside the corner casting, and one portion protruding in a downward direction out of said corner casting. The container is then moved to the ship, normally by means of an STS crane (ship to shore crane) with a spreader, and is to be superimposed onto an already loaded container on the ship. The protruding portions of each of the four twistlocks of the container to be loaded are then inserted into the uppermost corner castings of the container already positioned on the ship, thereby securing the two containers onto each other and preventing them from e.g. shifting away from each other or slipping into the sea.

Since the 1950's, the male locking device of the rotary connector is further developed to avoid having to rotate the bottom portion manually when attaching the lock to a corner casting. The dimensions of the corner castings are standardized in ISO 1161:1984.

Document DE10 2009 019 955 A1 discloses a locking device having a housing and a vertical locking member rotary mounted in the housing. By rotating the locking member, the locking device can engage the corner casting or be disengaged there from. A stop member, which can be brought into engagement with the locking member, is movable by means of a guide member, so that the stop member at one position prevents the locking member from rotating and at another position permits the rotation.

Document EP 2 910 421 A2 discloses a locking device comprising a housing and a locking mechanism, which by means of a manually operated control lever can be shifted between a locking position, where the locking mechanism locks the locking device to a corner casting, and an open position, where the locking mechanism and the corner casting are free from each other. The locking mechanism includes at least one pivotal arm with a hook end. When two arms are used, they are swung in opposed directions. The locking device is suitable for mounting on a vehicle or similar fastening location for a shipping container that is lowered down on it. However, there is no disclosure as to how the locking device is secured to the vehicle or similar fastening location.

Document EP 2 143 665 A1 discloses a locking device for securing together upper and lower shipping containers to prevent a stack of shipping containers from shifting away from one another or slipping into the sea from a container ship. The locking device includes interconnected upper and lower retaining members, each adapted to be inserted into a hole in a corner piece of a respective one of the upper and lower shipping containers, and at least one swing member disposed inside the lower retaining member. The upper retaining member has a top end aligned with a bottom end of the lower retaining member along an axial line of the locking device. The swing member includes a lower pivot portion connected pivotally to the lower retaining member, and an upper engaging portion which is proximate to the axial line in a non-engaging position and when the axial line of the locking device is substantially vertical, and which moves away from the axial line in an engaging position when the axial line of the locking device is inclined and non-vertical.

Document WO 2005/054086 A1 discloses a method for the automatic locking and unlocking of coupling pieces, whereby an at least partial locking of the coupling pieces occurs on a displacement of the shipping container in the plane of the deck, which can be reversed by an opposing displacement of the container. A fully-automatic coupling piece comprises a coupling projection, for vertical connection of the container, with anchoring lugs, running in the transverse direction of the container of which at least one anchoring lug may be displaced. The aim is to use a relative displacement of the container, in the direction of the deck, for carrying out an automatic locking of the container. On reversal of said displacement, an equally automatic unlocking of the container is possible. Document WO 2011 110743 A1 discloses a coupling device for coupling shipping containers, particularly for coupling containers used in container ships and land transport. The coupling device includes a fastening piece formed in the upper part of its body part, by which the body part can be fastened in a corner casting in a corner of the container by rotating the body part around its vertical axis, whereby the fastening piece is locked in the corner piece of the container. The body part includes a planar coupling plate formed between its upper part and lower part, and the body part further includes a cam part below the coupling plate. In addition, body part is fitted with a first rotatable lever-like locking part for preventing and/or releasing the motion of the body part, and the body part includes a second rotatable lever-like locking part for enabling and/or preventing the motion of the body part. The second lever-like locking part is either directly or indirectly in contact with the first lever-like locking part so that, as the first lever-like rotates, the second lever-like locking part is also able to rotate for enabling the locking mode and the unlocking mode. In the second lever-like locking part, there is formed a protrusion for receiving vertical forces between the containers.

US 8,228,185 B2 and US 8,228,186 B2 disclose systems for remote control of the locking and unlocking of a lock for a shipping container.

US2010089914 shows a lock with a mechanism for automatically engaging hooks which extend when the lock is inclined.

WO2016060961 and EP1937511 relate to locks in which the weight off an upper container causes portions of the lock to rotate and secure the upper container to a lower container.

### SUMMARY OF THE INVENTION

It is an object of the present invention to provide a lock for locking a shipping container in place when superimposed on another container e.g. on a container ship, which prevents unintentional release of two superimposed, loaded containers e.g. by sudden, vertical and horizontal movements which may occur on a cargo ship in case of rough seas.

This object is achieved by means of a lock according to claim 1.

Thanks to this solution, once being in a locked configuration where the bottom portion is introduced into a corner casting of a lower container and the hook member is locked into a moved-out position, the lock according to claim 1 will retain the upper and lower containers together regardless of direction of movement of said containers. For instance, when loaded onto a cargo ship, the loaded containers may be subjected to strong and unpredictable forces when large waves causes the vessel to e.g. heave, roll and yaw. A lock according to claim 1 will keep two containers steadily linked to one another even in case of sudden vertical and horizontal movements.

Other objects of the invention is to provide a lock which may be locked as well as unlocked automatically on the ship (i.e. no manual handling required on board) and which enables for automatic, remote validation as to whether the lock is actually in a locked configuration or not once the container is loaded.

Another object is to provide said lock with components enabling remote control of the locking and unlocking function of the lock. Thereby, an external control unit, which may be handheld or mounted accessible for the operator in the container crane, can be used to control the locking/unlocking of the lock. Thus, thanks to the invention the lock may be automatically maneuvered (locked/unlocked) and no manual handling is required on board. This is a great advantage since such automatization provides for drastically improved security level for personnel: every year a number of persons are involved in accidents associated with handing/locking of container locks on container ships due to heavy weather (rain, wind etc), sometimes in combination with bad sight.

A remote control of locking also enables for a convenient way of validate whether the lock is actually in a locked configuration or not once the container is loaded.

According to one aspect of the invention, the lock fills out the opening of the corner casting so that the container is prevented from sliding sideways which leads to a robust and reliable connection of the lock into the corner casting.

This and other objectives, advantages and aspects of the invention can be achieved in that the lock comprises the features claimed in claim 1. Other features and aspects of the invention are defined by the independent claims or are evident from the description of a preferred embodiment.

### BRIEF DESCRIPTION OF THE DRAWINGS

In the following, the invention will be described in more detail with reference to a preferred embodiment and the appended drawings.
- Fig. 1a: illustrates how a conventional lock according to prior art is secured into the corner casting of a container.
- Fig. 1b: is a schematic view showing a cross section of two superimposed containers.
- Fig. 1c: is an isometric view of a lowermost corner casting of a container, viewed at an angle from below.
- Fig. 1d: is an isometric view of an uppermost corner casting of a container, viewed at an angle from above.
- Fig. 2a: is an isometric view of a lock according to a preferred embodiment of the present invention showing a first hook member retracted into a housing.
- Fig. 2b: is an isometric view of the lock of Fig. 2a rotated 90°around a vertical axis showing a second hook member pushed out through an opening in the casing.
- Fig. 2c: is an isometric view of the lock of Fig. 2a, rotated 180° around a vertical axis.
- Fig. 3: is an exploded view of the lock of Fig 2a - c.
- Fig. 4: is an isometric view of the lock of Fig. 1 wherein the housing is divided vertically into a first and a second housing part, and one of the housing parts is removed to show the interior including hook members and motor for pivoting the hook members.
- Fig. 5a: - b are side views of showing the interior of the two housing parts respectively.
- Fig. 6: is an isometric view of the motor, a transversal locking bar, and the two pivotal locking members.
- Fig. 7: is an isometric view showing the position of the transverse locking bar when the hook members are in a pushed out position, thus blocking the pivotal movement of the hook members.
- Fig. 8: is an isometric view similar to Fig. 7 but showing the position of the transverse locking bar in a mode that enables the hook members to move from extended to retracted position.
- Fig. 9a: is a side view of the lock of Fig. 1 with some parts removed and one hook member in a pushed out to a position where it has a generally horizontal abutment surface abutting on the inner top side of a corner casting.
- Fig. 9b: is a cross sectional side view showing a lock according to a preferred embodiment when positioned and secured into an upper and a lower corner casting respectively.
- Fig. 10: is a detailed view, showing a spring member associated with one of the hook members.
- Fig. 11a: is an isometric view showing the shaft and motor connected to a locking bar.
- Fig. 11b: is an isometric view showing a cover to a motor as shown in Fig. 11a.
- Figs. 12a - b: shows two examples of hook member designs.
- Figs. 13a - b: shows two examples of locking bar designs.

### MODE(S) FOR CARRYING OUT THE INVENTION

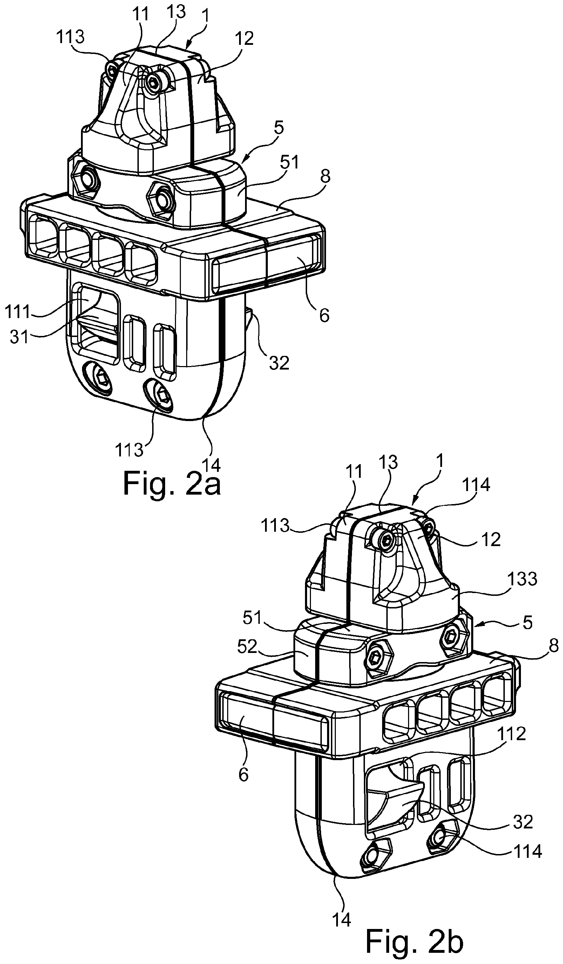

Figs 2a - c show a preferred embodiment of a lock for locking a shipping container **3** in place when superimposed on another, lower container **3'** e.g. on a container ship. The lock comprises a vertical housing **1** having a top portion **13** and a bottom portion **14**, where the bottom portion **14** has a shape fitting in a dedicated opening **21'** in a corner casting **2'** (shown in Fig 1d) of a container **3'**. The corner casting opening **21'** is generally oval, but its two long sides are parallel to each other. The housing **1** is divided vertically into a first housing part **11** and a second housing part **12,** and at least the first housing part **11** has a side opening **111** at a lower end of the bottom portion **14.** The two housing parts **11** and **12** are attached to each other by screws **113** and nuts **114** to form the housing **1.**

Figs. 1a-b illustrates the established principle of manually attaching a lock **10** into a corner casting **2** of a container **3** on the quayside. In a corresponding manner to shown in Fig. la, the lock according to the invention is also arranged to be manually positioned into the lowermost corner castings **2** of a container **3,** one in each of the four corners. When such positioning of the locks is completed, a container crane transports the shipping container **3** by lifting from the quay onto the container ship whereat said container **3** is to be superimposed onto an already loaded container **3',** as schematically illustrated in Fig. 1b. At this point, the bottom portions **14** of the respective locks that are protruding from the corner castings **2** are arranged to be introduced and fitted into the upper corner castings **2'** of the lower, already loaded container **3'.** Upon being rightfully positioned, the locks **10** at each corner is actuated into a locked configuration, according to the invention preferably by remote control of the lock which eliminates the need for manual locking on board. Once in position on a ship, each of the four locks connects and retains an upper **3** and a lower **3'** container via their lowermost **2** and uppermost **2'** corner castings respectively.

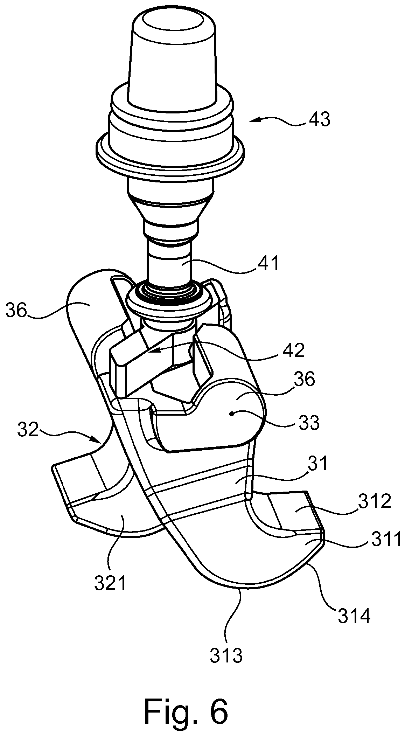

Referring again mainly to Figs. 2a - c, the lock further comprises a first hook member **31,** which is pivotally mounted within the housing **1** and has a hook end **311** that can be moved out and moved back through the side opening **111** to couple the lock to and uncouple the lock from the corner casting **2',** and a shaft **41** (see e.g. Fig. 6), which is mounted in the housing **1** and operatively connected to said at least one hook member **31** to either lock the hook member **31** in the moved-out position of said hook end or permit the hook member to move between the moved-out position and the moved back position of said hook end **311.** Further, the top portion **13** of the housing **1** has a neck **131** and there above a head **132** comprising a retaining flange **133** arranged to provide a retaining function when the top portion **13** is fitted into said dedicated opening **21** in the corner casting **2** of the upper container **3.**

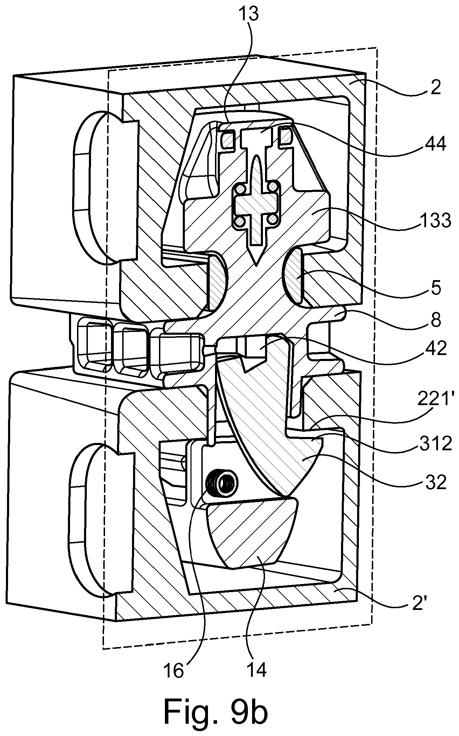

In a preferred embodiment, the lock also comprises a guide neck **5** (also here referred to as "rotary ring member") that is mounted around the neck **131,** which guide neck **5** has a peripheral shape made to fit in a dedicated opening **21** in a lowermost corner casting **2** of a shipping container **3** (see Figs. 1a and 9b respectively). To permit the mounting of the guide neck **5** around the neck **131,** the guide neck **5** is divided into two identical halves **51** and **52** that are fixed to each other by screws **53** and nuts **54.**

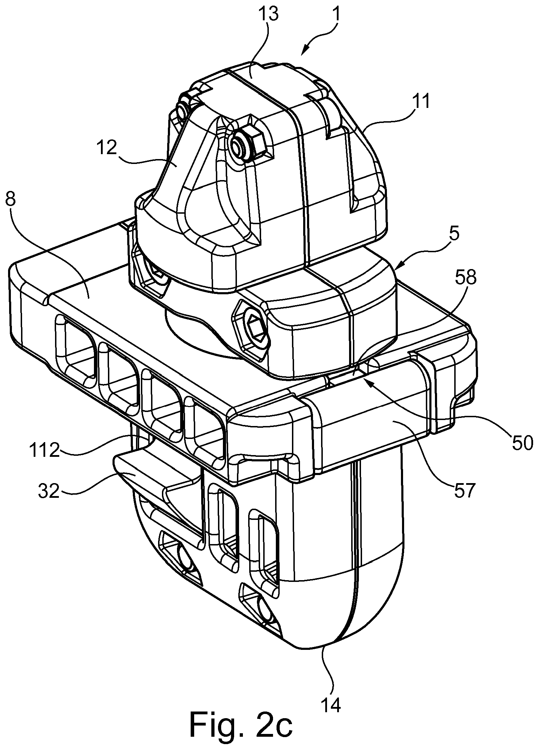

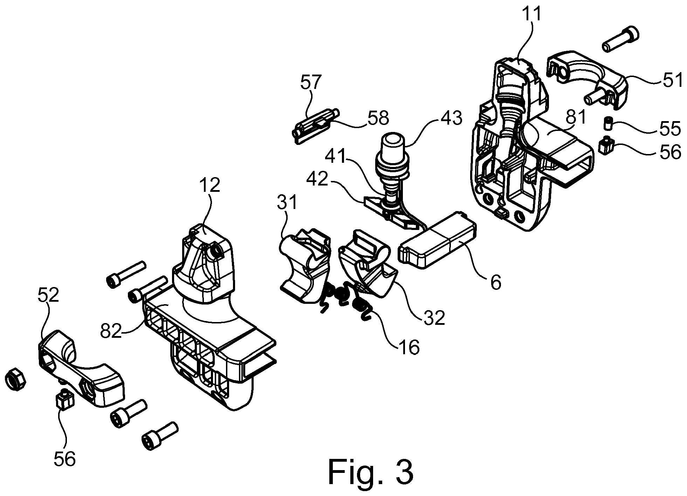

The isometric view of Fig. 2c shows the guide neck **5** positioned around the neck **131** where the housing **1** and the retaining flange **133** is twisted a quarter of a turn in relation to the guide neck. Herein is also seen that both the head **132** and the guide neck **5** are designed to fit in a dedicated opening **21** of a corner casting **2.** The guide neck is also arranged to be rotatable around the neck of the housing. The housing **1** and guide neck **5** also comprises a guide ring lock **50** positioned at one side of the intermediate part **8.** The components of the lock are seen also in the exploded view of Fig. 3. Said lock **50** comprises a spring member **55** positioned in a recess inside the guide neck, a locking unit **56** abutting the spring and urged by the spring to protrude out of the recess, a lever **57** pivotally mounted at the intermediate part of the housing, and a locking support **58** presenting a cavity in the intermediate part. When in a locked position, the locking unit **56** is arranged to rest on the locking support **58** which, in its turn, is part of the lever **57.**

When introducing the top portion **13** into a dedicated opening **21** of a corner casting **2,** the head **132** of the housing **1** and the guide neck are aligned so that they both can be fitted into said opening **21.** The guide neck **5** now fills essentially the entire opening with its body. Next, the housing 1 is turned in relation to the guide neck **5** (which is fixated by being form fitted in the opening **21**) until the locking unit **56** reaches the locking support **58.** The locking unit **56** is then urged by the spring **55** to enter the cavity at the locking support to prevent further rotation of the guide neck **5** and lock it in the corresponding position. In this configuration, the retaining flange **133** has been twisted a quarter of a turn inside the corner casting so that the head **132** is prevented from exiting the dedicated opening unless said guide neck lock **50** is opened by means of activating the lever **57.**

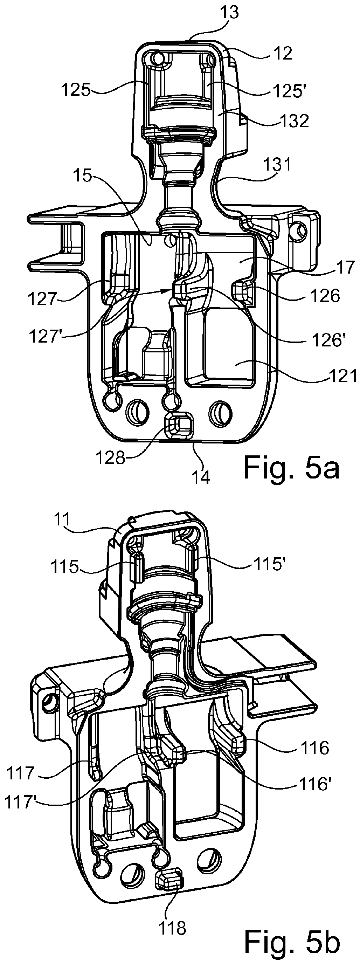

Figs. 5a - b show isometric views of the two housing parts (Fig. 5a showing the second housing part **12** and Fig. 5b showing the first housing part 11). The two halves are arranged to be attached together by screws **113** and nuts **114,** and are also arranged to be stabilized onto each other, once begin screwed together, by means of supporting and stabilizing protrusions and meeting corresponding recesses. It is e.g. seen in Fig. 5a that the second housing part is exposing a pair of upper recesses **125, 125',** a pair of central/middle protrusions **126, 126'** as well as a pair of central/middle recesses **127, 127'** and also a lower recess 128. These parts are compatible with protrusions and recesses of the meeting, first housing part **11** in Fig. 5b, which in a corresponding manner comprises upper protrusions **115, 115',** central/middle recesses **117, 117'** and central/middle protrusions **116, 116'** and a lower protrusion **118.** Once attached to one another to form a housing **1** the protrusions and recesses contribute to increased strength of the lock, which upon use on a container ship will have to endure and hold for large forces and impacts. The skilled person understands that the protrusions and recesses may be designed in other ways than in the herein shown example in Figs. 5a - b.

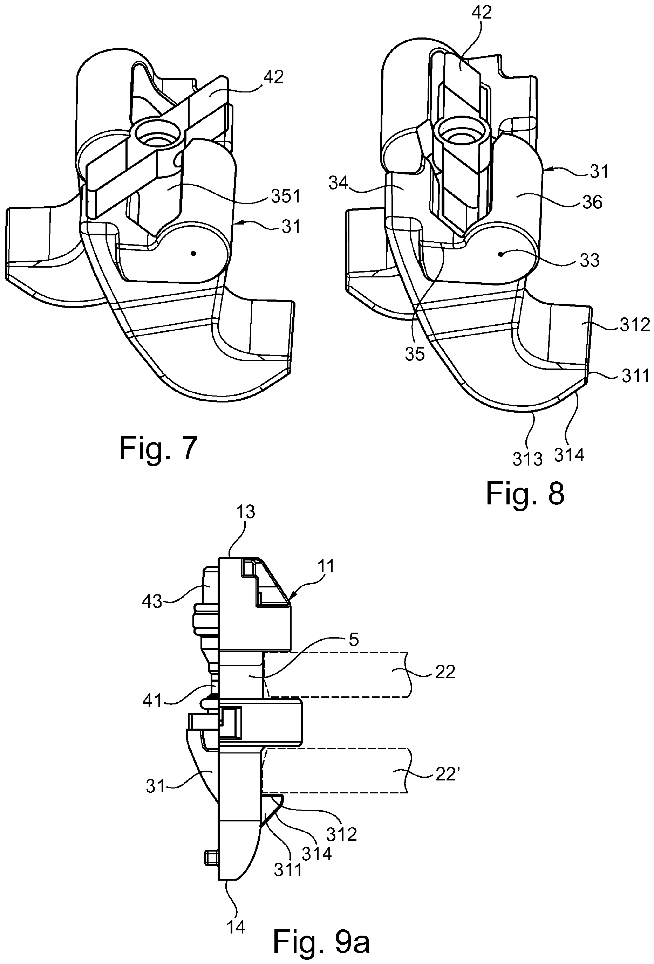

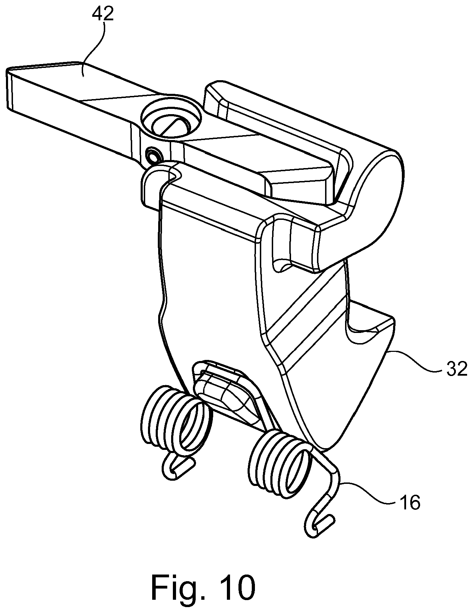

As is best shown in Fig. 9a - 9b, the hook end **311** of the hook member **31** in the moved-out position has a generally horizontal first abutment surface **312** adapted to abut on an inner side **221'** of a generally horizontal wall **22'** of the corner casting **2'.** As further shown in Fig. 10, a spring **16** is arranged to press the hook member **31** toward the moved-out position of the hook end **311.** Then, the hook end **311** has a bottom portion **313** with a guide surface **314** that faces outward from the housing **1.** On insertion of the lock in the corner casting **2',** this guide surface **314** will abut on a rim **211'** of said opening **21'** in the corner casting **2'** to resiliently guide the lock to a predetermined position. (In this context, a prim sign (') is used to designate association of a reference sign with upper corner casting **2'** of a container.) Suitably, to facilitate the entering of the bottom portion **14** into the hole **21'** in the corner casting **2',** the hole **21'** has a conical or funnel-like cross-sectional shape, and the bottom portion **14** of the housing **1** is rounded but truncated. Thereby, a container **3** provided with the locks of the present invention does not have to be positioned exactly right above a container it shall be attached to. Minor sideways corrections will be carried out automatically, and on insertion of the lock into the corner casting **2',** the spring loaded hook members **31** while passing through the holes **21'** will first be pressed back to their moved-back position in the housing **1** to permit the lock to enter the corner casting **2'** but return to their moved-out position and secure the container **3** as soon as they have passed through the holes **21'.**

As is best shown in Figs. 6, 7 and 8, the hook member **31** has a pivot axis **33** and a locking surface **34** adjacent the pivot axis **33.** The hook member **31** has a shoulder **35** that projects generally horizontally from the pivot axis **33** and, with reference to an intermediary vertical plane, in a direction opposed to that of the hook end **311,** and the locking surface **34** is located on said shoulder **35.** A locking bar **42** is fixed to the shaft **41** which upon movement of the shaft **41** is movable between a locking position shown in Figs. 6 and 7, where the locking bar **42** engages said locking surface **34** of the hook member **31,** and a free position shown in Fig. 8, where the locking bar **42** is out of engagement with the hook member **31.**

The opposite end of the hook member **31** in relation to the hook end **311** has the shape of a transversal sturdy rod **36** of circular cross-section, and the rod has a longitudinal axis that coincides with the pivot axis **33.** The two halves **11, 12** of the housing **1** together form a seat **17** for the rod **36** to permit the pivoting movement of the hook member **31** between the moved-out position and the moved-back position.

The shoulder **35** has a recess **351** that is best shown in Fig. 7 and located at the side of the locking surface **34** and also extending into a portion of the rod **36.** The recess **351** is shaped to receive a portion of the locking bar **42** in the free position to permit the hook member **31** to move back into the housing **1.** When the locking bar **42** is in the free position, the spring loaded hook member **31** can be pressed back from its moved-out position to its moved-back position against the force of the spring **16.** The housing **1** has an internal abutment **15** shown in Fig. 5a that stops any vertical upward movement of the hook member shoulder **35** and the locking bar **42,** when the locking bar **42** locks the hook member **31** in moved-out position and the hook member **31** is exposed to a pivotal force.

The head **132** of the housing top portion **13** has a peripheral shape made to fit in a dedicated opening **21** in corner casting **2** of the container, and the head **132** is oriented perpendicularly to an orientation, i.e. main horizontal extension, of the housing bottom portion **14.** After insertion of the lock from below into an opening **21** in the corner casting **2,** so that the head **132** has passed upward through the opening and the ring **5** is fitted in the opening **21,** the lock is rotated a quarter of a turn around a vertical axis to fix the lock to the corner casting **2.** The bottom portion **14** of the housing **1** now has the required orientation to fit in the hole **21'** of the upper corner casting **2'** of an already loaded container **3'.**

In the preferred embodiment shown in the drawings, also the second housing part **12** has a side opening **112** at a lower end of the bottom portion **14,** an additional hook member **32** is pivotally mounted within the housing **1** and has a hook end **321** that can be pushed out and retracted through the side opening **112** of the second housing part **12.** The hook members **31** and **32** are mounted to move in opposite directions relative each other, so that they in their moved-out position project outwards from their respective housing part **11** and **12,** respectively. All description above relating to the first hook member **31** is applicable also to the second hook member **32.** The shaft **41** is operatively connected to both of the hook members **31** and **32** thus being able to switch between a locked and an unlocked configuration respectively. In said locked configuration (see Fig. 7), said locking bar **42** is arranged to engage said locking surface **34** of the respective hook members **31, 32** thus keeping them in a pushed out position (preventing retraction), and correspondingly, in said unlocked (free) position (see Fig. 8) the bar **42** is moved to be located adjacent to, and above said recess **351** whereby said hook members **31, 32** are permitted to retract and move back into the housing **1** against the force of the spring **16.**

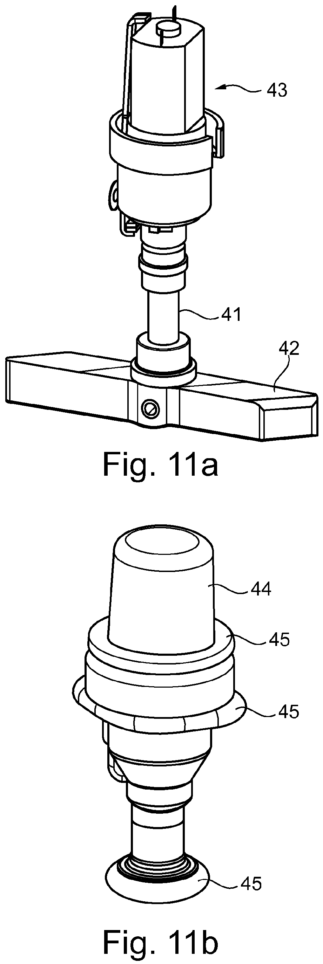

The motor **43,** the thereto connected shaft **41** and the locking bar **42** are shown in Fig. 11a. Fig. 11b shows a cover for said motor and shaft respectively. Preferably, the motor **43** is provided for moving the shaft **41.** In the preferred embodiment shown in the drawings, the shaft **41** is a generally vertical rotary shaft and the motor **43** rotates the shaft. However, if desired, it is of course possible that the shaft **41** is a linearly displaceable rod that can be displaced linearly by the motor **43,** and the shaft **41** may be generally horizontal, if desired. In both cases, the motor **43** suitably is located inside the lock housing **1** and preferably is a DC motor and possibly other types of suitable motors such as solenoid.

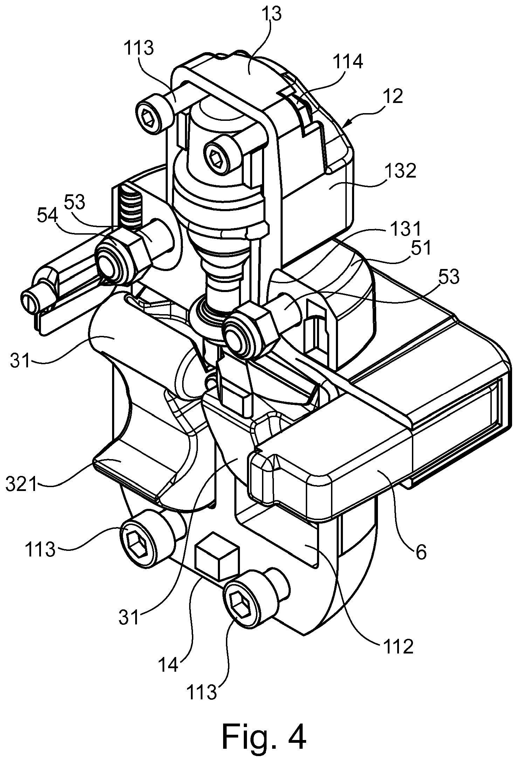

It is also preferred that the lock comprises an internal device **6** shown e.g. in Fig. 4 and configured to transmit and receive information to and from an external communication unit (**7**, not shown). It is suitable that the internal device **6** includes a CPU **61,** a memory (not shown) configured to store information regarding whether the lock is locked or unlocked, and an antenna **62** for wireless communication with the external communication unit. According to one embodiment, the internal device **6** may be equipped with a radio transmitter and receiver. Preferably, the internal device **6** also includes at least one battery (**63**, not shown) located inside the housing **1.** The battery supplies the necessary energy for driving the internal communication device **6,** the CPU **7,** internal sensors for assessment and communication of the position of the lock (locked or unlocked) and the motor **43.**

Unloading of a container **3** from a ship, which container **3** is superimposed and locked onto a lower container **3'** by means of corner casting locks according to the invention, is now to be briefly described. As previously described, the stacked containers on a ship are secured onto each other by means of twistlocks during transport. Upon unloading a container **3,** said four corner twistlocks are to be opened to permit release of the uppermost container and move it to the quayside by means of an STS crane. Thanks to the invention, opening of the locks may be done by remote control, signaling to the motor to turn said shaft **41** and move the bar **42** from a free configuration where the hook members **31, 32** may move in and out of the respective side openings **111, 112.** Next, said crane grabs the container as known per se, and initiates a lifting movement. At this point, the generally horizontal abutment surface **312** of the hook end **311** will press against the inner horizontal surface **221'** of the corner casting **2'.** Since the pivot axis **33** of the hook member is displaced in relation to the hook end **311,** pressing against the corner casting surface **221'** will cause the hook to rotate inwards, and be pushed against the force of the spring **16** to retract into the housing **1** via the side opening **111.** When being in a fully pushed-in position, the lock may be withdrawn from the corner casting **2'** and the container **3** to be unloaded is thereby released from the lower container **3'**

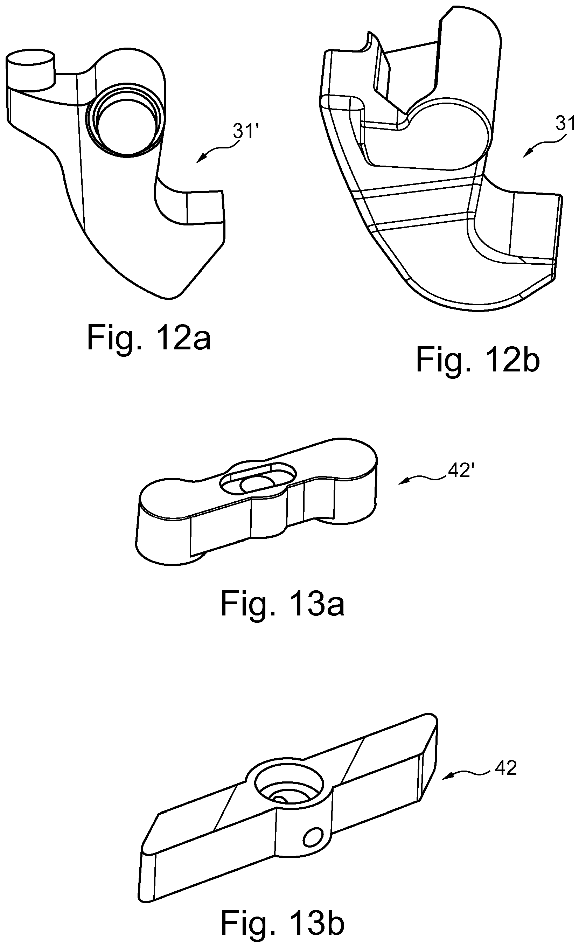

The invention is not to be seen as limited by the preferred embodiments described, but can be varied within the scope of the appended claims. For instance, said locking bar **42** and the corresponding hook member **31** and their locking engagement may be solved differently compared to the above described embodiment. In Fig. 12a there is seen a hook member **31'** according to further embodiment according to the invention, with an upper surface having a protruding portion. The corresponding locking bar **42'** is seen in Fig. 13a. This alternative hook member 31' configuration is based on the same principle as the one described above (and shown e.g. in Figs. 6 - 8), namely to be operably connected to said locking bar **42'** arranged to switch between a locked and an unlocked position.

Also, as an alternative to split the housing **1** vertically into two housing parts **11, 12** as herein described, the housing **1** can be split into two housing parts horizontally, preferably through the middle section **8,** to create one upper housing part and one lower housing part. In the case of a horizontal split of the housing **1,** the upper housing part and the lower housing part may be attached to each other by screws **113** and nuts **114,** through the middle section **8** to form a unified housing **1.**

Furthermore, the abutment surface **312** of the hook member **31** is preferably horizontal, however, the skilled person understands that the lock according to the invention may function also with said hook having a sloped abutment surface.

## Claims

1. A lock for securing upper and lower superimposed shipping containers in place, **characterized in** said lock comprising:
- a vertical housing (**b**) having a top portion (**13**) and a bottom portion (**14**), the top portion (**13**) having a shape fittable in a dedicated opening (**21**) in a corner casting (**2**) of an upper container (**3**), and the bottom portion (**14**) having a shape fittable in a dedicated opening (**21'**) in a corner casting (**2'**) of a lower container (**3'**);
- said housing (**1**) comprising a first (**11**) and a second (**12**) housing part; and
- said first housing part (**11**) having a side opening (**111**) at a lower end of the bottom portion (**14**);
- said top portion (**13**) of the housing (**1**) having a neck (**131**) and there above a head (**132**) comprising a retaining flange (**133**) arranged to provide a retaining function when the top portion (**13**) is fitted into said dedicated opening (**21**) in the corner casting (**2**) of an upper container (**3**)
- at least a hook member (**31**) pivotally mounted within the housing (**1**) and having a hook end (**311**) that can be moved out and moved back through the side opening (**111**) for coupling the lock to and for uncoupling the lock from a corner casting (**2'**);
**characterized by**
- a spring (16) arranged to push each hook member (**31**) towards a moved-out position of said hook end (**311**);
- a shaft (**41**) mounted in the housing (**1**) and operatively connected to said at least one hook member (**31**) to either lock the hook member (**31**) in the moved-out position of said hook end (**311**) or permit the hook member (**31**) to move between the moved-out position and the moved-back position of said hook end (**311**);
- a motor (**43**) for moving the shaft (**41**); and
- a locking bar (**42**) fixed to the shaft (**41**) and upon movement of the shaft (**41**) by the motor (43) being movable between a locking position, where the locking bar (**42**) engages a locking surface (**34**) of the hook member (**31**) and locks the hook member (31) in said moved-out position and a free position, where the locking bar (**42**) is out of engagement with the hook member (**31**).

2. A lock as claimed in claim 1 comprising a rotary guide neck (**5**) being mounted around the neck (**131**), said guide neck (**5**) having a peripheral shape adapted for fitting in a dedicated opening (**21**) in a corner casting (**2**) of an upper container (**3**).

3. A lock as claimed in claim 2, wherein said rotary guide neck (**5**) comprises a guide neck lock (**50**) arranged to releasably lock the guide neck (**5**) in relation to the head (**132**) of said housing (**1**) in a position wherein said guide neck (**5**) is twisted a quarter of a turn compared to the head (**132**).

4. A lock as claimed in any one of claims 1 - 3, wherein the hook end (**311**) of the hook member (**31**) in the moved-out position has a generally horizontal first abutment surface (**312**) adapted for abutting on an inner side of a generally horizontal wall (**221'**) of a corner casting (**2'**).

5. A lock as claimed in any one of claims 1 - 4, wherein a spring (**16**) presses the hook member (**31**) toward the moved-out position of the hook end (**311**), preferably wherein the hook end (**311**) has a bottom portion (**313**) with a guide surface (**314**) that faces outward from the housing (**1**), said guide surface (**314**) on insertion of the lock in a corner casting (**2'**) abutting on a rim (**211'**) of an opening (**21'**) in the corner casting (**2'**) to resiliently guide the lock to a predetermined position.

6. A lock as claimed in any one of claims 1-5, wherein the hook member (**31**) has a pivot axis (**33**) and said locking surface (**34**) adjacent the pivot axis (**33**), and upon movement of the shaft (**41**) the locking bar (42) is movable between a locking position, where the locking bar (**42**) at least upon lifting of a container engages said locking surface (**34**) of the hook member (**31**), and a free position, where the locking bar (**42**) is out of engagement with the hook member (**31**), preferably wherein the hook member (**31**) has a shoulder (**35**) that projects generally horizontally from the pivot axis (**33**) and, with reference to an intermediary vertical plane, in a direction opposed to that of the hook end (**311**), the locking surface (**34**) being located on said shoulder (**35**).

7. A lock as claimed in claim 6, wherein the shoulder (**35**) has a recess (**351**) located at the side of the locking surface (**34**), the recess (**351**) being shaped to receive a portion of the locking bar (**42**) in the free position to permit moving the hook member (**31**) back into the housing (**1**).

8. A lock as claimed in claim 6 or 7, wherein the housing (**1**) has an internal abutment (**15**) stopping any vertical upward movement of the hook member shoulder (**35**) and the locking bar (**42**).

9. A lock as claimed in any one of claims 1-8, wherein the head (**132**) of the housing (**1**) has a peripheral shape adapted for fitting in a dedicated opening (**21**) in a corner casting and wherein the head (**132**) is oriented perpendicularly to an orientation of the bottom portion (**14**) of the housing (**1**) or the head (**132**) is oriented in an angle of at least 45 degrees to an orientation of the bottom portion (**14**) of the housing (**1**).

10. A lock as claimed in any one of claims 1-9, wherein also the second housing part (**12**) has a side opening (**112**) at a lower end of the bottom portion (**14**), an additional hook member (**32**) is pivotally mounted within the housing (**1**) and has a hook end (**321**) that can be moved out and moved back through the side opening (**112**) of the second housing part (**12**), and the shaft (**41**) is operatively connected to both of the hook members (**31, 32**) to either lock the hook members (**31, 32**) in the moved-out position of said hook ends (**311, 321**) or permit the hook members (**31, 32**) to move between the moved-out positions and the moved-back positions of said hook ends (**311, 321**).

11. A lock as claimed in any one of claims 1-10, wherein the shaft (**41**) is a generally vertical rotary shaft and the motor (**43**) rotates the shaft (**41**).

12. A lock as claimed in claim any one of claims 1-10, wherein the shaft (**41**) is a linearly displaceable rod and the motor (**43**) displaces the shaft (**41**) linearly wherein said shaft (**41**) preferably is generally horizontal.

13. A lock as claimed in any one of claims 1-12, further comprising inside the housing (**1**) an internal device (**6**) configured to transmit and receive information to and from an external communication unit.

14. A lock as claimed in claim 13, further comprising within wherein the internal device (6) includes a CPU (61), a memory configured to store information regarding whether the lock is locked or unlocked, and an antenna (62) for wireless communication with the external communication unit.

15. A lock as claimed in any one of the previous claims, further comprising at least one battery located inside the housing (**1**).

## Patentansprüche

1. Verriegelung zum Sichern oberer und unterer übereinanderliegender Versandbehälter an Ort und Stelle, **gekennzeichnet durch** die Verriegelung, umfassend:
- ein vertikales Gehäuse (1) mit einem oberen Abschnitt (13) und einem unteren Abschnitt (14), wobei der obere Abschnitt (13) eine Form aufweist, einpassbar in eine zugehörige Öffnung (21) in einem Eckbeschlag (2) eines oberen Behälters (3), und der untere Abschnitt (14) eine Form aufweist, einpassbar in eine zugehörige Öffnung (21') in einem Eckbeschlag (2') des unteren Behälters (3');
- wobei das Gehäuse (1) ein erstes (11) und ein zweites (12) Gehäuseteil umfasst; und
- wobei das erste Gehäuseteil (11) eine Seitenöffnung (111) an einem unteren Ende des unteren Abschnitts (14) aufweist;
- wobei der obere Abschnitt (13) des Gehäuses (1) einen Hals (131) aufweist und dort darüber einen Kopf (132), umfassend einen Halteflansch (133), der angeordnet ist, eine Haltefunktion bereitzustellen, wenn der obere Abschnitt (13) eingepasst ist in die zugehörige Öffnung (21) in dem Eckbeschlag (2) eines oberen Behälters (3)
- wenigstens ein Hakenelement (31), das schwenkbar in dem Gehäuse (1) montiert ist, und ein Hakenende (311) aufweist, das herausbewegt und zurückbewegt werden kann durch die Seitenöffnung (111), um die Verriegelung zu koppeln mit und um die Verriegelung zu entkoppeln von einem Eckbeschlag (2');
**gekennzeichnet durch**
- eine Feder (16), die angeordnet ist, jedes Hakenelement (31) in Richtung einer herausbewegten Position des Hakenendes (311) zu drücken
- einen Schaft (41), der in dem Gehäuse (1) montiert ist und betriebsbereit mit dem wenigstens einen Hakenelement (31) verbunden ist, um entweder das Hakenelement (31) zu verriegeln in der herausbewegten Position des Hakenendes (311) oder dem Hakenelement (31) zu ermöglichen, sich zwischen der herausbewegten Position und der zurückbewegten Position des Hakenendes (311) zu bewegen;
- ein Motor (43) zum Bewegen des Schafts (41); und
- eine Verriegelungsstange (42), befestigt an dem Schaft (41), und bei Bewegung des Schafts (41) durch den Motor (43) bewegbar zwischen einer Verriegelungsposition, wobei die Verriegelungsstange (42) in eine Verriegelungsfläche (34) des Hakenelements (31) eingreift und das Hakenelement (31) verriegelt in der herausbewegten Position und einer freien Position, in der die Verriegelungsstange (42) nicht mit dem Hakenelement (31) in Eingriff steht.

2. Verriegelung nach Anspruch 1, umfassend einen drehbaren Führungshals (5), der um den Hals (131) montiert ist, wobei der Führungshals (5) eine periphere Form aufweist, die angepasst ist, dass sie in eine zugehörige Öffnung (21) in einem Eckbeschlag (2) eines oberen Behälters (3) passt.

3. Verriegelung nach Anspruch 2, wobei der drehbare Führungshals (5) eine Führungshalsverriegelung (50) umfasst, die angeordnet ist, den Führungshals (5) lösbar zu verriegeln in Bezug auf den Kopf (132) des Gehäuses (1) in einer Position, in der der Führungshals (5) ein Viertel einer Umdrehung verglichen zu dem Kopf (132) gedreht ist.

4. Schloss nach einem der Ansprüche 1-3, wobei das Hakenende (311) des Hakenelements (31) in der herausbewegten Position eine im Allgemeinen horizontale erste Anlagefläche (312) aufweist, die angepasst ist, an einer inneren Seite einer im Allgemeinen horizontalen Wand (221') eines Eckbeschlags (2') anzuliegen.

5. Schloss nach einem der Ansprüche 1-4, wobei eine Feder (16) das Hakenelement (31) in Richtung der herausbewegten Position des Hakenendes (311) drückt, bevorzugt wobei das Hakenende (311) einen unteren Abschnitt (313) mit einer Führungsfläche (314) aufweist, die von dem Gehäuse (1) nach außen zeigt, wobei die Führungsfläche (314) beim Einführen der Verriegelung in einen Eckbeschlag (2'), der an einem Rand (211') einer Öffnung (21') in dem Eckbeschlag (2') anliegt, um die Verriegelung nachgiebig in eine vorbestimmte Position zu führen.

6. Verriegelung nach einem der Ansprüche 1-5, wobei das Hakenelement (31) eine Schwenkachse (33) aufweist und die Verriegelungsfläche (34) angrenzend der Schwenkachse (33), und bei Bewegung des Schafts (41) die Verriegelungsstange (42) bewegbar ist zwischen einer Verriegelungsposition, wobei die Verriegelungsstange (42) wenigstens beim Heben eines Behälters in die Verriegelungsfläche (34) des Hakenelements (31) eingreift, und einer freien Position, in der die Verriegelungsstange (42) nicht mit dem Hakenelement (31) in Eingriff steht, bevorzugt wobei das Hakenelement (31) eine Schulter (35) aufweist, die im Allgemeinen horizontal von der Schwenkachse (33) hervorsteht, und in Bezug auf eine dazwischenliegende vertikale Ebene, in einer Richtung entgegengesetzt zu der des Hakenendes (311), wobei sich die Verriegelungsfläche (34) an der Schulter (35) befindet.

7. Verriegelung nach Anspruch 6, wobei die Schulter (35) eine Aussparung (351) aufweist, die sich an der Seite der Verriegelungsfläche (34) befindet, wobei die Aussparung (351) geformt ist, einen Abschnitt der Verriegelungsstange (42) aufzunehmen in der freien Position, um Bewegen des Hakenelements (31) zurück in das Gehäuse (1) zu ermöglichen.

8. Verriegelung nach Anspruch 6 oder 7, wobei das Gehäuse (1) eine innere Angrenzung (15) aufweist, die jede vertikale Aufwärtsbewegung der Hakenelementschulter (35) und der Verriegelungsstange (42) stoppt.

9. Verriegelung nach einem der Ansprüche 1-8, wobei der Kopf (132) des Gehäuses (1) eine periphere Form aufweist, die angepasst ist, dass sie in eine zugehörige Öffnung (21) in einen Eckbeschlag passt und wobei der Kopf (132) senkrecht ausgerichtet ist zu einer Ausrichtung des unteren Abschnitts (14) des Gehäuses (1) oder der Kopf (132) ausgerichtet ist in einem Winkel von wenigstens 45 Grad zu einer Ausrichtung des unteren Abschnitts (14) des Gehäuses (1).

10. Verriegelung nach einem der Ansprüche 1-9, wobei auch das zweite Gehäuseteil (12) eine Seitenöffnung (112) an einem unteren Ende des unteren Abschnitts (14) aufweist, wobei ein zusätzliches Hakenelement (32) schwenkbar in dem Gehäuse (1) montiert ist und ein Hakenende (321) aufweist, das herausbewegt und zurückbewegt werden kann durch die Seitenöffnung (112) des zweiten Gehäuseteils (12), und der Schaft (41) betriebsbereit mit beiden der Hakenelemente (31, 32) verbunden ist, um entweder die Hakenelemente (31, 32) zu verriegeln in der herausbewegten Position der Hakenenden (311, 321) oder den Hakenelementen (31, 32) zu ermöglichen, sich zwischen den herausbewegten Positionen und den zurückbewegten Positionen der Hakenenden (311, 321) zu bewegen.

11. Verriegelung nach einem der Ansprüche 1-10, wobei der Schaft (41) ein im Allgemeinen sich vertikal drehender Schaft ist und der Motor (43) den Schaft (41) dreht.

12. Verriegelung nach einem der Ansprüche 1-10, wobei der Schaft (41) eine linear verschiebbare Stange ist und der Motor (43) den Schaft (41) linear versetzt, wobei der Schaft (41) bevorzugt im Allgemeinen horizontal ist.

13. Verriegelung nach einem der Ansprüche 1-12, ferner umfassend in dem Gehäuse (1) eine interne Vorrichtung (6), die konfiguriert ist, Informationen zu übertragen zu und zu empfangen von einer externen Kommunikationseinheit.

14. Verriegelung nach Anspruch 13, wobei die interne Vorrichtung (6) einschließt eine CPU (61), einen Speicher, der konfiguriert ist, Informationen bezüglich ob die Verriegelung verriegelt ist oder nicht verriegelt zu speichern, und eine Antenne (62) zur drahtlosen Kommunikation mit der externen Kommunikationseinheit.

15. Verriegelung nach einem der vorhergehenden Ansprüche, ferner umfassend wenigstens eine Batterie, die sich in dem Gehäuse (1) befindet.

## Revendications

1. Verrou pour verrouiller en position des conteneurs d'expédition superposés supérieurs et inférieurs, **caractérisée en ce que** ledit verrou comprend :
- un boîtier vertical (1) ayant une partie supérieure (13) et une partie inférieure (14), la partie supérieure (13) ayant une forme pouvant être installée dans une ouverture dédiée (21) dans une pièce moulée d'angle (2) d'un récipient supérieur (3), et la partie inférieure (14) ayant une forme adaptable dans une ouverture dédiée (21 ') dans une pièce moulée d'angle (2) d'un récipient inférieur (3');
- ledit boîtier (1) comprenant une première (11) et une seconde (12) parties de boîtier; et
- ladite première partie de boîtier (11) ayant une ouverture latérale (111) à une extrémité inférieure de la partie inférieure (14);
- ladite partie supérieure (13) du boîtier (1) ayant un col (131) et au-dessus une tête (132) comprenant une bride de retenue (133) agencée pour assurer une fonction de retenue lorsque la partie supérieure (13) est emboîtée dans ladite ouverture dédiée (21) dans la pièce moulée d'angle (2) d'un récipient supérieur (3)
- au moins un élément de crochet (31) monté de manière pivotante à l'intérieur du boîtier (1) et ayant une extrémité de crochet (311) qui peut être déplacée en position sortie et ramenée en position rentrée à travers l'ouverture latérale (111) pour coupler le verrou à et pour désaccoupler le verrou d'une pièce moulée d'angle (2');
**caractérisé par**
- un ressort (16) agencé pour pousser chaque élément de crochet (31) vers une position sortie de ladite extrémité de crochet (311);
- un arbre (41) monté dans le boîtier (1) et connecté fonctionnellement audit au moins un élément de crochet (31) pour soit verrouiller l'élément de crochet (31) dans la position sortie de ladite extrémité de crochet (311), soit permettre à l'élément de crochet (31) de se déplacer entre la position sortie et la position rentrée de ladite extrémité de crochet (311);
- un moteur (43) pour déplacer l'arbre (41); et
- une barre de verrouillage (42) fixée à l'arbre (41) et étant mobile lors du mouvement de l'arbre (41) par le moteur (43) entre une position de verrouillage, où la barre de verrouillage (42) vient en prise avec une surface de verrouillage (34) de l'élément de crochet (31) et verrouille l'élément de crochet (31) dans ladite position sortie, et une position libre, où la barre de verrouillage (42) est hors d'engagement avec l'élément de crochet (31).

2. Verrou selon la revendication 1, comprenant un col de guidage rotatif (5) monté autour du col (131), ledit col de guidage (5) ayant une forme périphérique adaptée pour s'emboîter dans une ouverture dédiée (21) dans un pièce moulée d'angle (2) d'un récipient supérieur (3).

3. Verrou selon la revendication 2, dans lequel ledit col de guidage rotatif (5) comprend un verrou de col de guidage (50) agencé pour verrouiller de manière libérable le col de guidage (5) par rapport à la tête (132) dudit boîtier (1) dans une position dans laquelle ledit col de guidage (5) est tordu d'un quart de tour par rapport à la tête (132).

4. Verrou selon l'une quelconque des revendications 1 à 3, dans lequel l'extrémité de crochet (311) de l'élément de crochet (31) dans la position sortie a une première surface de butée (312) généralement horizontale adaptée pour venir en butée sur un côté intérieur d'une paroi généralement horizontale (221') d'une pièce moulée d'angle (2').

5. Verrou selon l'une quelconque des revendications 1 à 4, dans lequel un ressort (16) presse l'élément de crochet (31) vers la position sortie de l'extrémité de crochet (311), de préférence dans laquelle l'extrémité de crochet (311) a une partie inférieure (313) avec une surface de guidage (314) qui fait face vers l'extérieur à partir du boîtier (1), ladite surface de guidage (314) lors de l'insertion du verrou dans une pièce moulée d'angle (2') venant en butée sur un rebord (211')) d'une ouverture (21 °) dans la pièce moulée d'angle (2') pour guider élastiquement le verrou vers une position prédéterminée.

6. Verrou selon l'une quelconque des revendications 1 à 5, dans lequel l'élément de crochet (31) a un axe de pivotement (33) et ladite surface de verrouillage (34) adjacente à l'axe de pivotement (33), et lors du mouvement de l'arbre (41), la barre de verrouillage (42) est mobile entre une position de verrouillage, où la barre de verrouillage (42) au moins lors du levage d'un conteneur vient en prise avec ladite surface de verrouillage (34) de l'élément de crochet (31), et une position libre, où la barre de verrouillage (42) est hors d'engagement avec l'élément de crochet (31), de préférence dans lequel l'élément de crochet (31) a un épaulement (35) qui fait saillie généralement horizontalement à partir de l'axe de pivot (33) et, en référence à un plan vertical intermédiaire, dans une direction opposée à celle de l'extrémité du crochet (311), la surface de verrouillage (34) étant située sur ledit épaulement (35).

7. Verrou selon la revendication 6, dans lequel l'épaulement (35) présente un évidement (351) situé du côté de la surface de verrouillage (34), l'évidement (351) étant conformé pour recevoir une partie de la barre de verrouillage (42) en position libre pour permettre le retour de l'organe de crochet (31) dans le boîtier (1).

8. Verrou selon la revendication 6 ou 7, dans lequel le boîtier (1) présente une butée interne (15) arrêtant tout mouvement vertical vers le haut de l'épaulement de l'élément de crochet (35) et de la barre de verrouillage (42).

9. Verrou selon l'une quelconque des revendications 1 à 8, dans lequel la tête (132) du boîtier (1) a une forme périphérique adaptée pour s'emboîter dans une ouverture dédiée (21) dans un coin moulé et dans laquelle la tête (132) est orientée perpendiculairement à une orientation de la partie inférieure (14) du boîtier (1) ou la tête (132) est orientée selon un angle d'au moins 45 degrés par rapport à une orientation de la partie inférieure (14) du boîtier (1).

10. Verrou selon l'une quelconque des revendications 1 à 9, dans lequel également la seconde partie de boîtier (12) a une ouverture latérale (112) à une extrémité inférieure de la partie inférieure (14), un élément de crochet supplémentaire (32) est monté pivotant à l'intérieur du boîtier (1) et a une extrémité de crochet (321) qui peut être déplacée vers l'extérieur et ramenée en position rentrée à travers l'ouverture latérale (112) de la seconde partie de boîtier (12), et l'arbre (41) est connecté de manière fonctionnelle aux deux éléments de crochet (31, 32) soit pour verrouiller les éléments de crochet (31, 32) dans la position sortie desdites extrémités de crochet (311, 321), soit pour permettre aux éléments de crochet (31, 32) de se déplacer entre les positions sorties et les positions rentrées desdites extrémités de crochet (311, 321).

11. Verrou selon l'une quelconque des revendications 1 à 10, dans lequel l'arbre (41) est un arbre rotatif généralement vertical et le moteur (43) fait tourner l'arbre (41).

12. Verrou selon l'une quelconque des revendications 1 à 10, dans lequel l'arbre (41) est une tige déplaçable linéairement et le moteur (43) déplace l'arbre (41) linéairement, dans lequel ledit arbre (41) est de préférence généralement horizontal.

13. Verrou selon l'une quelconque des revendications 1 à 12, comprenant en outre à l'intérieur du boîtier (1) un dispositif interne (6) configuré pour transmettre et recevoir des informations vers et depuis une unité de communication externe.

14. Verrou selon la revendication 13, dans lequel le dispositif interne (6) comprend une unité centrale (61), une mémoire configurée pour stocker des informations concernant si le verrou est verrouillé ou déverrouillé, et une antenne (62) pour communication sans fil avec l'unité de communication externe.

15. Verrou selon l'une quelconque des revendications précédentes, comprenant en outre au moins une pile située à l'intérieur du boîtier (1).
